# EUROPÄISCHE PATENTSCHRIFT

(11) **EP 0 612 446 B1**
(45) Veröffentlichungstag und Bekanntmachung des Hinweises auf die Patenterteilung: **20.09.1995**
(21) Anmeldenummer: 92923396.3
(22) Anmeldetag: 11.11.1992
(51) Int. Cl.: H02K 41/025, H02K 41/03

(54) **LINEAR-MOTOR ODER -GENERATOR SOWIE STATOR HIERFÜR**
LINEAR MOTOR OR GENERATOR AND STATOR THEREFOR
MOTEUR LINEAIRE OU GENERATRICE LINEAIRE AINSI QUE STATOR POUR UN TEL APPAREIL

(30) Priorität: 12.11.1991 DE 4137201
(43) Veröffentlichungstag der Anmeldung: 31.08.1994
(73) Patentinhaber: INTRASYS GMBH, D-80339 München (DE)
(72) Erfinder: ROSNER, Peter, D-8000 München 70 (DE); STOIBER, Dietmar, D-8120 Weilheim (DE); EBER, Wolfgang, D-8000 München 60 (DE)
(74) Vertreter: Prechtel, Jörg, Dipl.-Phys. Dr.
(86) Internationale Anmeldenummer: EP9202587
(87) Internationale Veröffentlichungsnummer: WO9310594

(56) Entgegenhaltungen:
- EP-A- 0 427 642
- DE-A- 2 142 452
- DE-A- 2 254 324
- DE-A- 2 912 532
- DE-A- 2 939 445
- FR-A- 938 028
- FR-A- 1 570 283
- FR-A- 2 088 080
- FR-A- 2 189 919
- FR-A- 2 419 341
- GB-A- 2 196 487
- US-A- 4 080 724
- US-A- 4 495 450

## Beschreibung

Die Erfindung betrifft einen Stator für einen Linear-Motor oder -Generator mit einem relativ zum Stator bewegbaren Läufer, wobei der Stator mit wenigstens einer Antriebswicklung versehen ist, welche wenigstens eine Wickelspule umfaßt, und wobei der Stator einen zur Längsrichtung des Linear-Motors oder -Generators parallel verlaufenden länglichen Kern aufweist, auf welchen die Wickelspulen sowie zwischen aufeinanderfolgenden Wickelspulen angeordnete Polzahnscheiben aufgeschoben sind.

Ein derartiger Stator ist bspw. aus der DE-A-2 142 452 bekannt. Die Wickelspulen der Antriebswicklung des Stators sowie zwischen diesen Spulen angeordnete, im wesentlichen rechteck-förmige Polzahnscheiben sind auf einen länglichen Kern aufgeschoben. Diese aus Antriebswicklung, Polzahnscheiben und Kern bestehende Anordnung ist von einem Gehäuse aus aushärtbarem Harz aufgenommen. Zur Bildung eines Linearmotors ist ein den Stator U-förmig umgreifender Läufer vorgesehen. Ferner ist vor der Öffnung des U-förmigen Läufers eine Stützplatte aus Aluminium angeordnet, die zur Verminderung magnetischer Verluste (Reduzierung der Statorinduktivität) und sich hieraus ergebender Verbesserung der des Wirkungsgrads und der Leistung des Linearmotors dient.

Aus der gattungsgemäßen FR-A-2 189 919 ist ein Stator bekannt, der auf einen Kern aufgeschobene Antriebswicklungen und Polzahnscheiben umfaßt. Zur Vermeidung magnetischer Verluste ist am Stator ferner eine Abschirmplatte aus elektrisch hochleitfähigem Material, bspw. Kupfer oder Aluminium, angeordnet. Die Abschirmplatte und der zur Bildung eines Linearmotors vorgesehene Läufer sind derart aufeinander abgestimmt ausgebildet, daß sie den Stator im wesentlichen auf seinem gesamten Umfang umschließen, ohne einander zu überlappen.

Gegenüber dem vorstehend genannten Stand der Technik ist es Aufgabe der Erfindung, einen Stator für einen Linearmotor oder -Generator mit verbesserter Induktivitätsreduzierung bereitzustellen.

Diese Aufgabe wird erfindungsgemäß durch Statoren mit den Merkmalen der Ansprüche 1 und 3 gelöst.

Weiterer Stand der Technik ergibt sich nach den Druckschriften DE-23 39 060 C3 und DE-24 55 911 C2 (Bild 4). Aufgrund der Anordnung der beiden Gruppen von Magneten des Läufers auf einander gegenüberliegenden Seiten des Stators heben sich die zwischen den beiden Magnetgruppen und dem Läufer jeweils wirkenden Anziehungskräfte gegenseitig zumindest teilweise auf. Ohne diese Maßnahme müßten die Anziehungskräfte, die zumeist um den Faktor 10 größer sind als die Vortriebskräfte, durch eine entsprechend mechanisch stabile Bewegungsführung des jeweils bewegten Teil abgefangen werden. Bei diesen bekannten Anordnungen besteht der hier ortsfeste Stator aus einer Zahnleiste mit auf die Zähne gewickelter Antriebswicklung, wobei die Zähne z.B. zu einer der beiden Magnetgruppen des Läufers weisen (DE-23 39 060 C3). Dies ergibt zum einen zwangsläufig eine in den meisten Fällen unerwünschte asymmetrische Anordnung mit ungleichen Anziehungskräften auf beiden Seiten des Läufers. Zum anderen ist der Herstellungs- und Montageaufwand für den Läufer ziemlich hoch. Im allgemeinen wird der Stator mit einer mehrphasig betriebenen Antriebswicklung versehen, wobei jeder Phase ein Spulensatz aus mehreren Wickelspulen zugeordnet ist mit ineinander verschachtelter Anordnung der Wickelspulen der z.B. drei Phasen. Um den Wicklungsdraht in die ihm jeweils zugeordneten Nuten zwischen den Zähnen einlegen zu können (Wickelachse senkrecht zur Stator-Längsrichtung), muß eine zumeist mehrere Zähne einschließende Wicklungsschlaufe gebildet werden, die seitlich ziemlich weit über den Stator hinaussteht. Nur so ist es möglich, einen flachen Stator mit einer mehrphasigen Wicklung zu versehen, ohne daß sich die Wicklungsdrähte am Statorrand gegenseitig behindern. Die so entstehenden Wicklungsschlaufen werden Wickelköpfe genannt. Die Wicklungsköpfe bedingen zum einen einen großen Herstellungsaufwand, zum anderen erfordern sie eine zusätzliche Kupfermenge, die sich nachteilig auf die Leistungsdaten des Stators auswirkt. Es gibt Stator-Ausführungsformen, bei denen die Drahtlänge, die für die Wickelköpfe benötigt wird, größer ist als die in den Nuten untergebrachte Drahtlänge. Die Wickelköpfe treiben damit den ohmschen Widerstand sowie die Induktivität der Gesamtwicklung in die Höhe. Hieraus erfolgt ein erhöhter Energiebedarf mit vergrößerter Verlustwärmeentwicklung.

Ein zu lösendes Problem besteht also darin, den Herstellungsaufwand zu reduzieren ohne Einbußen in den elektrischen und mechanischen Eigenschaften des Linear-Motors oder -Generators. Hierzu weist der Stator einen zur Längsrichtung des Linearmotors parallel verlaufenden länglichen Kern auf, auf den die Wickelspulen der Reihe nach aufgeschoben sind.

Die Bestückung des Stators mit der Antriebswicklung ist denkbar einfach, da hierzu lediglich die Wickelspulen der Reihe nach aufzuschieben sind, die bereits vorher in der geeigneten Weise verdrahtet sein können. Die Wickelspulen-Achsen fallen mit der Stator-Längsrichtung zusammen. Die Effektivität des Linearmotors ist aufgrund der vollständigen Umschließung des durch den Kern geführten Magnetflusses durch die Wickelspulen sowie aufgrund der zumindest zweiseitigen Gegenüberstellung von Magnet bzw. Reaktionsschiene und Spulendraht weiterhin hoch. Es müssen keine besonderen Maßnahmen zur hoch belastbaren mechanischen Befestigung der Wickelspulen am Kern getroffen werden, da der Kern die Wickelspulen zentral durchsetzt.

Diese vorteilhafte Stator-Bauweise, insbesondere in Verbindung mit der wenigstens zweiseitigen Wicklungsausnützung durch die entsprechenden Gruppenmagneten ist sowohl in der zumeist üblichen Lang-Statoranordnung mit ortsfestem und daher problemlos mit elektrischer Energie versorgbaren Stator einsetzbar, wie auch in der Kurz-Statoranordnung mit bewegtem Stator und ortsfestem Läufer. Darüber hinaus ist der Stator auch in einem Asynchron-Linearmotor einsetzbar, bei welchem anstatt der Gruppen von Magneten elektrisch gut leitfähige Reaktionsschienen (z.B. aus Kupfer) vorgesehen sind.

Um Wirbelstromverluste im Kern klein zu halten, wird vorgeschlagen, daß der Kern von einem Metallblechpaket aus sich in Längsrichtung des Linear-Motors erstreckenden Blechstreifen gebildet ist.

Aufgrund dieser Bauweise ergibt sich die Möglichkeit, daß zur Bereitstellung eines Linear-Motors mit wenigstens abschnittsweise gebogenem Fahrweg der Stator dementsprechend gebogen ausgebildet ist mit Abbiegung um eine zur Metallblechebene des Metallblechpakets parallelen Biegeachse. Auf diese Weise lassen sich ohne weiteres beliebig gekrümmte, in einer Ebene liegende Fahrwege erzielen bei ruhigem Lauf dank glatter Übergänge.

Eine weitere Verbesserung der Ausnutzung der Antriebswicklung des Stators kann dadurch erreicht werden, daß am Läufer eine dritte Reaktionsschiene oder Gruppe von Magneten angebracht ist, die einer weiteren Seite des Stators gegenüberliegt. Im Gegensatz zu den sich wechselseitig aufhebenden magnetischen Anziehungskräften der beiden einander gegenüberliegenden Reaktionsschienen bzw. Gruppen von Magneten bleibt die zwischen der dritten Reaktionsschiene bzw. Gruppe von Magneten und dem Läufer wirkende Anziehungskraft bestehen. Diese kann bei unter dem Stator angeordneter dritter Reaktionsschiene bzw. Gruppen von Magneten zur Entlastung der Gewichtskraft genutzt werden oder, bei umgekehrter Anordnung, zur Vergrößerung der Sicherheit gegen Verlassen der Spur bei spurgeführten Fahrzeugen.

Eine besonders kompakte Bauweise bei besonders hoher Ausnutzung der Antriebswicklung des Stators ergibt sich in einer Weiterbildung der Erfindung dadurch, daß der Läufer den Stator wenigstens angenähert kreisförmig teilweise oder vollständig umschließt. Bei der vollständig umschlossenen Anordnung muß der Stator an seinen beiden Enden gehaltert werden, so daß keine allzu langen Statorlängen infrage kommen.

Zur Erhöhung des durch die Läufermagnete geführten, von den Antriebswicklungen hervorgerufenen magnetischen Flusses wird vorgeschlagen, daß die Magnete sämtlicher Gruppen jeweils über eine magnetische Rückschluß-Leiste miteinander verbunden sind.

Dementsprechend wird für den Fall eines Asynchron-Motors vorgeschlagen, daß auf der vom Läufer abgewandten Seite der Reaktionsschiene ein statorfestes oder läuferfestes magnetisches Rückschlußblech vorgesehen ist.

Auch eine Mischung von synchronem und asynchronem Betrieb kann von Vorteil sein, insbesondere beim Start des Linear-Motors aus einer beliebigen Ausgangsposition. Fährt man den Motor im asynchronen Betrieb an, so ist keinerlei Kenntnis über die momentane Lage des Läufers relativ zu den Magneten des Stators erforderlich. Während des anfahrenden Motors kann dann über entsprechende Sensoren die erforderliche Lage-Information erhalten werden, so daß dann problemlos auf Synchronbetrieb übergegangen werden kann. Schließlich kann ein Asynchronbetrieb auch zum Bremsen vorteilhaft eingesetzt werden, insbesondere durch Kurzschließen der Antriebswicklung. Schließlich besteht bei Asynchronbetrieb auch die Möglichkeit, mehrere bewegte Einheiten des Linear-Motors unabhängig voneinander und ggf. auch ohne Abstand voneinander anzutreiben.

Um beide Betriebsarten in einem einzigen Linear-Motor oder -Generator zu ermöglichen, wird vorgeschlagen, daß sowohl wenigstens eine Reaktionsschiene als auch wenigstens eine Gruppe von Magneten am Läufer vorgesehen sind.

Der vorstehend beschriebene Linear-Motor oder -Generator zeichnet sich durch kostengünstige, materialsparende Herstellbarkeit des Stators aus, insbesondere auch durch Serienfertigung, bei guter Ausnutzung der Antriebswicklung durch die Umgreifung des Stators durch den Läufer. Ein weiterer Vorteil liegt darin, daß der von den Magneten des Läufers im Kern erzeugte Magnetfluß sich mit dem von der Antriebswicklung erzeugten Fluß aufgrund einer konstruktionsbedingten Phasenverschiebung günstig überlagert, so daß der Eisenkern des Stators nur auf den größeren der Maximalwerte des einen und des anderen Flusses ausgelegt werden muß und nicht, wie bei anderen Anordnungen, auf die Summe der beiden Maximalwerte. Bei vorgegebenen Maximalwerten kann daher ein für niedrigeren Höchstfluß ausgelegter und damit kostengünstigerer Kern mit reduziertem Querschnitt eingesetzt werden.

Wenn in diesem Zusammenhang von Linear-Generator gesprochen wird, so soll darunter allgemein eine Anordnung zur Strom- bzw. Spannungserzeugung verstanden werden, also auch beispielsweise der Einsatz als Linear-Tachometer. Im folgenden wird hauptsächlich der motorische Anwendungsfall besprochen. Für den Generatorbetrieb können die Ausführungen sinngemäß übernommen werden.

Die Erfindung betrifft auch einen Stator, insbesondere für einen Linearmotor oder Linear-Generator der vorstehend beschriebenen Art. Dieser umfaßt erfindungsgemäß einen länglichen Kern, auf den Kern aufgeschobene Wickelspulen sowie auf den Kern aufgeschobene, zwischen aufeinanderfolgenden Wickelspulen angeordnete Polzahnscheiben. Der Stator ist sehr kostengünstig zu fertigen, da lediglich die Wickelspulen und Polzahnscheiben auf den Kern aufzuschieben sind. Die Wickelspulen können vorgefertigt sein, insbesondere unter Verwendung eines die Wicklung aufnehmenden Wickelträgers. Aufgrund der Polzahnscheiben ergibt sich ein vorteilhaft großer Magnetfluß. Aufgrund der Phasenverschiebung der Ortskurven des von den Läufermagneten im Kern erzeugten Magnetflusses sowie des von den Wickelspulen im Kern erzeugten Magnetflusses entsprechend dem Schubwinkel muß der Kern nicht für die Summe der Maximalwerte beider Magnetflüsse ausgelegt werden, sondern lediglich auf den größeren der beiden Maximalwerte. Es kann demzufolge ein kostengünstigerer Kern mit reduziertem Querschnitt eingesetzt werden.

Um Wirbelstromverluste im Kern gering zu halten, wird vorgeschlagen, daß der Kern von einem Kern-Metallblechpaket aus in Längsrichtung des Kerns sich erstreckenden Blechstreifen gebildet ist. Um auch in den Polzahnscheiben Wirbelstromverluste klein zu halten, wird vorgeschlagen, daß die Polzahnscheiben jeweils von einem Polzahn-Metallblechpaket gebildet sind aus senkrecht zur Längsrichtung des Kerns angeordneten Blechscheiben. Diese Blechscheiben lassen sich einfach auch in großer Stückzahl, z.B. durch Stanzen, herstellen.

Um in den Blechscheiben den Kern umgreifende elektrische Kreisströme zuverlässig auszuschließen, wird ferner vorgeschlagen, daß die Polzahn-Blechpakete jeweils mit einem in Längsrichtung durchgehenden und in eine Kern-Aufnahmeöffnung des Blechpakets einmündenden Schlitz versehen sind. Hierbei ist es zur optimalen Ausnutzung des Magnetflusses von Vorteil, wenn der Schlitz auf einer vom Läufer abgewandten Statorseite angeordnet ist.

Der Schlitz kann auch übergangslos in die Kern-Aufnahmeöffung übergehen, so daß sich im Umriß U-förmige Blechscheiben ergeben.

Um die Blechscheiben zuverlässig mechanisch zusammenzuhalten, wird vorgeschlagen, daß auf der dem Schlitz gegenüberliegenden Seite des Polzahn-Blechpakets eine Schweißnaht zur Verbindung der Blechscheiben vorgesehen ist. Auf diese Weise lassen sich auch vormontierte Polzahn-Blechpakete vorbereiten, die dann lediglich zusammen mit den Spulen auf den Kern aufzuschieben sind.

Ein besonderer Vorteil der erfindungsgemäßen Stator-Ausgestaltung mit Schlitz in den Blechpaketen liegt darin, daß die Zuführleitungen der Wickelspulen in die Schlitze eingelegt werden können. Die seitlich vorstehenden Wikkelköpfe der eingangs beschriebenen bekannten Statoren werden also durch auf dem kürzesten Wege verlaufende Zuführleitungen ersetzt. Dies spart Leitungsmaterial ein und reduziert die störende Selbstinduktion sowie die Verlustwärme.

Verwendet man für die Wickelspulen Wickelträger, die die Spulenwindungen zum Kern hin sowie nach beiden Seiten hin abdecken, so wird bei herkömmlicher Bauart die zum innenliegenden Wickelanfang führende Zuleitung entlang der Innenseite einer der beiden Seitenwände des Wickelträgers radial nach innen geführt. Diese Zuführleitung verhindert, daß der Wickelträger zwischen den beiden Seitenwänden vollständig mit Windungen ausgefüllt wird. Um erfindungsgemäß den Innenraum des Wickelträgers praktisch vollständig ausnutzen zu können (Erhöhung des Kupferfüllfaktors), wird vorgeschlagen, daß eine zu einem innenliegenden Wickelanfang einer Wickelspule führende Zuleitung durch eine dementsprechend weit innenliegende Durchgangsöffnung einer Seitenwand eines Wickelträgers geführt ist.

In Weiterbildung der Erfindung wird vorgeschlagen, daß der Scheibenumfriß der Polschuhscheiben angenähert trapezförmig ist mit dem Läufer zugewandter Trapezbasis und vorzugsweise mit Schlitz auf der gegenüberliegenden Seite.

Diese Formgebung der Polzähne verringert den Streufluß sowie die Induktivität des Stators. Außerdem ergibt sich eine beträchtliche Gewichtsreduktion.
Ein Vorteil der beschriebenen Statorbauweise mit Kernlaminierung und ggf. Polzahnlaminierung liegt darin, daß der Stator auch ohne weiteres um eine zur Ebene der Bleche des Stators parallele Krümmungsachse gebogen werden kann, so daß auch eine dementsprechend gewundene Motorlaufbahn erhältlich ist. Da der Kern sowohl die Spulenkörper als auch die Polzahnscheiben zentral durchsetzt, sind keine besonderen Maßnahmen zur Fixierung dieser Teile am Kern erforderlich.

Die beschriebene Stator-Bauweise mit Vermeidung von seitlich vorstehenden Wicklungsköpfen erlaubt auch den Einschluß des Stators in ein ggf. vollständig geschlossenes Stator-Gehäuse aus unmagnetischem Gehäusematerial. Dieses Stator-Gehäuse kann äußerst kompakt ausgeführt sein, da zwischen den Polzähnen und dem Stator-Gehäuse bei elektrisch nicht leitendem Gehäusematerial überhaupt kein Spalt und bei elektrisch leitfähigem Material lediglich ein gering zu dimensionierender Isolierspalt vorzusehen ist. Die Zuführleitungen für die Windungen können, wie bereits ausgeführt, durch die Schlitze verlaufen.

Es hat sich nun herausgestellt, daß bei der Verwendung eines elektrisch leitfähigen Gehäusematerials, insbesondere Stahl, die Statorinduktivität (Selbstinduktion) stark reduziert wird, ohne daß gleichzeitig das Eindringen des Magnetflusses der Läufermagneten in das Gehäuse störend behindert wird. Dies reduziert wiederum die erforderliche Schaltleistung (= Produkt von Versorgungsspannung und Laststrom) der elektronisch gesteuerten Energieversorgung der Antriebswicklung. Schließlich ist eine niedrige Selbstinduktion der Antriebswicklung auch für ein Notbremssystem für Störfälle von Vorteil. Bei diesem System wird die Antriebswicklung kurzgeschlosen, um ein Abbremsen aufgrund der Erzeugung von Induktionsströmen in der Antriebswicklung durch die Läufermagneten zu erreichen. Eine geringe Induktivität führt zu sehr hohem Induktionsstrom und damit zu großer Bremswirkung.

Als besonders vorteilhaftes Gehäusematerial hat sich V2A-Stahl herausgestellt, da dieser zu den günstigen magnetischen und eletrischen Eigenschaften auch noch hohe Korrosionsbeständigkeit aufweist. Auch läßt sich V2A-Stahl relativ gut verarbeiten.

In Weiterbildung der Erfindung wird vorgeschlagen, daß im Statorgehäuse elektronische Schaltelemente zur gesteuerten Spannungsversorgung der Wickelspulen angeordnet sind. Auf diese Weise werden auch die elektronischen Schaltelemente zuverlässig gegen Umwelteinflüsse geschützt. Als Schaltelemente kommen bevorzugt Direktumrichter infrage, insbesonere Triacs oder Thyristoren, wie diese zur Linear-Motorsteuerung an sich bereits bekannt sind (EP-0 315 727-A1).

Um die in das Gehäuse eingesetzten Bauteile dort mechanisch zuverlässig sowie gegeneinander gut elektrisch isolierend zu halten, wird vorgeschlagen, daß das Stator-Gehäuse mit Kunstharz oder dergleichen ausgegossen ist.

Auf diese Weise kann die Antriebselektronik problemlos im Stator-Gehäuse untergebracht werden, ggf. einschließlich eines Sensors zur Pollagenfeststellung durch Messung der von den Läufermagneten in einer Wicklungsspule erzeugten Induktionsspannung.

Die Erfindung betrifft schließlich auch ein Verfahren zur Pollagenmessung bei einem Linear-Motor oder -Generator, insbesondere der vorstehend beschriebenen Art, welches dadurch gekennzeichnet ist, daß man während einer Strompause einer Antriebswicklung des Stators die in dieser Antriebswicklung von den Läufermagneten erzeugte Induktionsspannung mißt und der Pollageermittlung zugrunde legt. In der genannten Strompause kann störungsfrei die von den Läufermagneten in der Antriebswicklung induzierte Spannung und damit die Pollage des Motors gemessen werden.

Die Erfindung wird im folgenden an bevorzugten Ausführungsbeispielen anhand der Zeichnung erläutert. Es zeigt:
- Fig. 1: eine schematische Teilansicht eines Linear-Motors;
- Fig. 2: eine perspektivische Ansicht einer bevorzugten Stator-Ausführungsform samt Verdrahtungsschema;
- Fig. 3: einen Längsschnitt des Stators gemäß Fig. 2, eingesetzt in ein Stator-Gehäuse;
- Fig. 4: einen Querschnitt des Stators gemäß Fig. 3 nach Linie IV-IV samt schematisch angedeutetem Läufer;
- Fig. 5: eine Direktumrichterschaltung zur Energieversorgung der Phasen der Antriebswicklung des erfindungsgemäßen Stators;
- Fig. 5A: ein zugehöriges Spannungs-Zeitdiagramm;
- die Fig. 6 bis 11: verschiedene Stator-Läuferanordnungen für einen Linear-Motor mit Synchron-Betriebsweise, nämlich

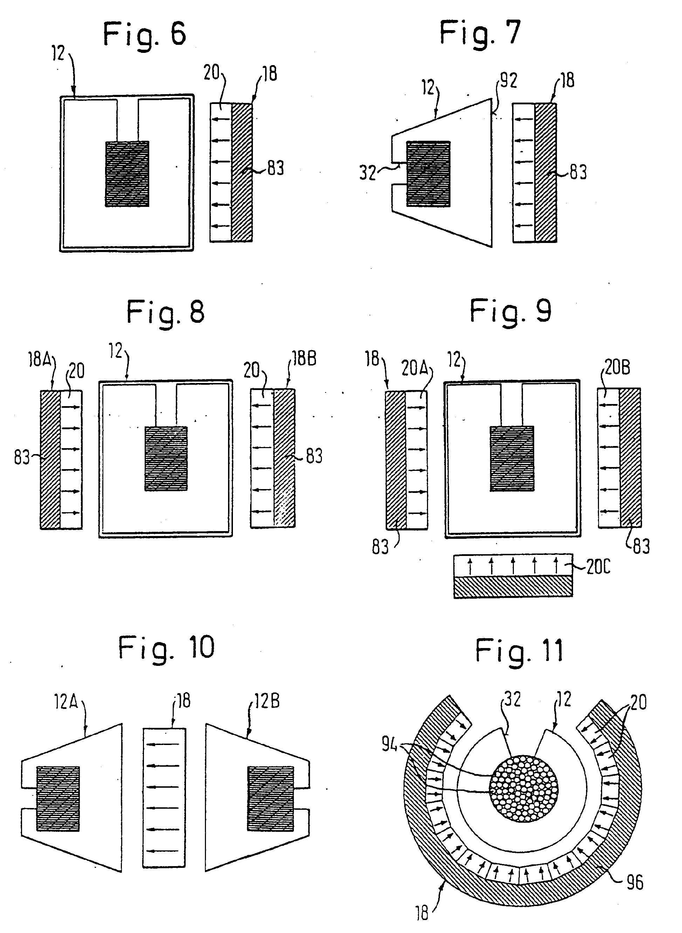

- Fig. 6: einen Stator mit einseitigem Läufer;
- Fig. 7: einen Stator mit einseitigem Läufer mit trapezförmigem Umriß der Polzahnscheiben;
- Fig. 8: einen Stator mit zweiseitigem Läufer;
- Fig. 9: einen Stator mit dreiseitigem Läufer;
- Fig. 10: einen Läufer mit zweiseitigem Stator;
- Fig. 11: einen von einem Läufer kreisförmig umringten Stator;

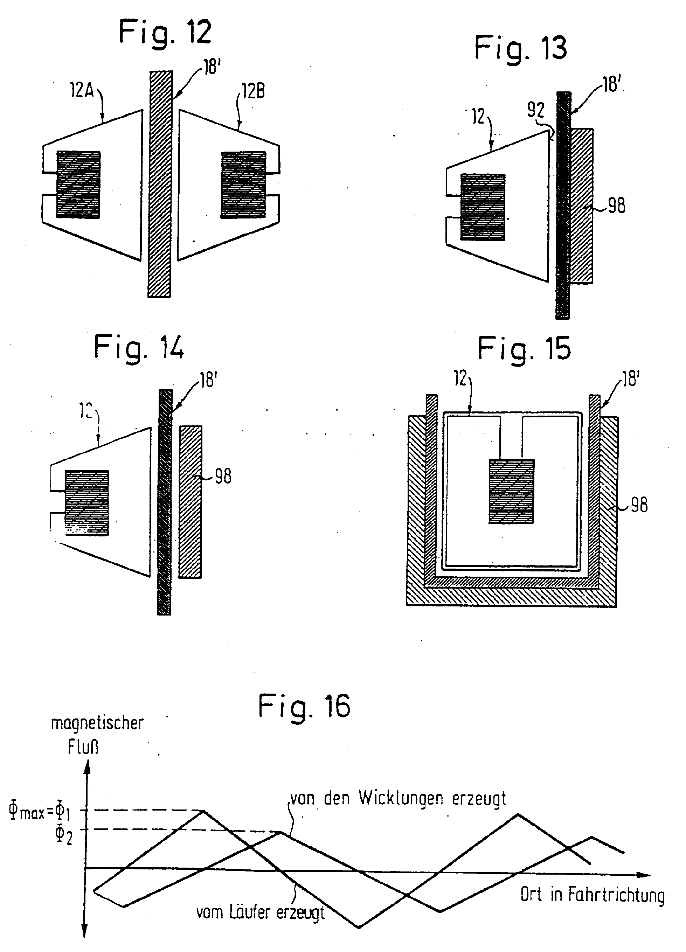

- die Fig 12 bis 15: einen Linearmotor mit Asynchron-Betriebsweise, nämlich
- Fig. 12: einen Läufer mit zweiseitigem Stator;
- Fig. 13: einen Läufer mit einseitigem Stator und am Läufer angebrachten Rückschlußblech;
- Fig. 14: einen Stator mit einseitigem Läufer und statorfestem Rückschlußblech;
- Fig. 15: einen Stator mit dreiseitigem Läufer; und
- Fig. 16: ein Schemadiagramm über den Ortsverlauf des Flusses im Kern.

Im folgenden werden Linear-Motoren der Langstator-Bauweise beschrieben. Die erfindungsgemäßen Merkmale lassen sich jedoch in gleicher Weise bei einem Linear-Motor der Kurzstator-Bauweise realisieren oder bei einem Linear-Generator der Kurzstator-Bauweise oder der Langstator-Bauweise. Bei den dargestellten Ausführungsbeispielen sind die Erregermagneten des Läufers Permanentmagnete; diese können im Bedarfsfall jedoch auch durch Elektromagnete ersetzt werden.

Die Statorwicklung kann im einfachsten Falle einphasig sein. Besonders vorteilhaft ist die auch in den Ausführungsbeispielen dargestellte dreiphasige Wicklung. In diesem Falle wird die Wicklung von wenigstens einem Spulensatz gebildet, der aus drei hintereinander angeordneten Wickelspulen besteht, die jeweils einer der drei Phasen zugeordnet sind.

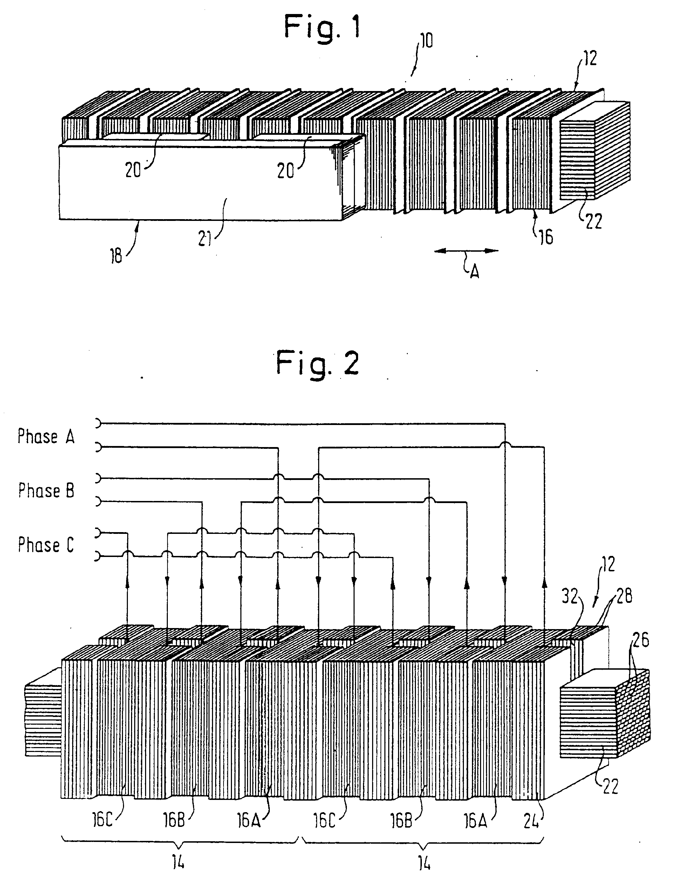

Dies wird anhand der Fig. 2 verdeutlicht. Der hier dargestellte, allgemein mit 12 bezeichnete Stator als Teil des in Fig. 1 grob schematisch angedeuteten Linear-Motors 10 weist zwei Spulensätze 14 auf aus jeweils drei Wickelspulen 16. Diese sind jeweils einer der Phasen A, B oder C zugeordnet und daher mit 16A,16B bzw. 16C bezeichnet.

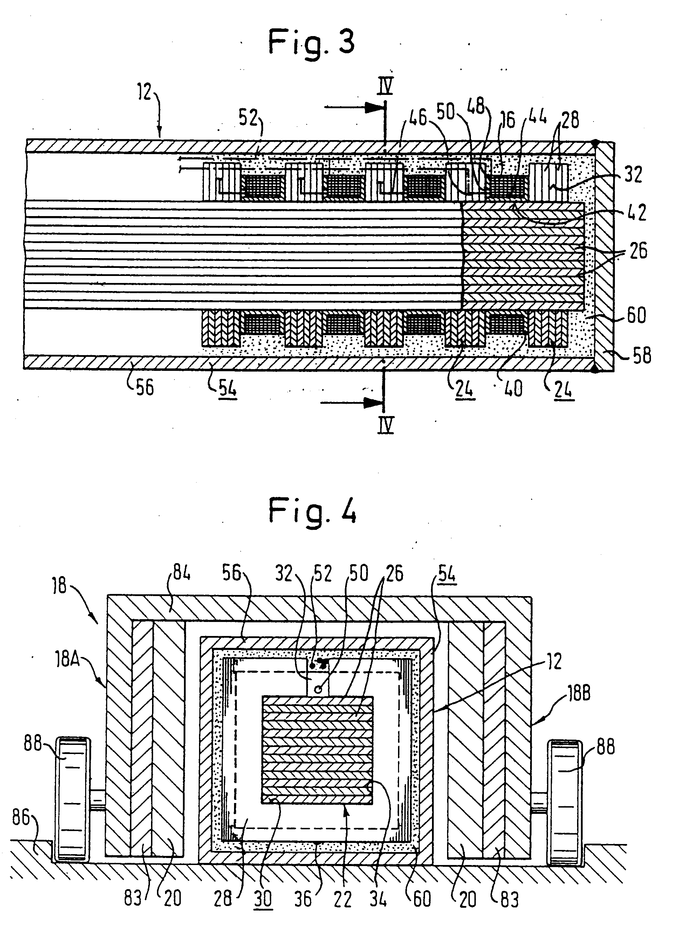

Der bei dieser Bauart bewegte Läufer 18 ist in Fig. 1 angedeutet. Er trägt Permanentmagnete 20, die über eine magnetische Rückschlußleiste 21 miteinander verbunden sind. Gemäß den Fig. 4 und 6 bis 11 kommen eine Reihe von Läuferkonfigurationen infrage, die anschließend noch erläutert werden.

Im folgenden wird der spezielle Stator-Aufbau beschrieben.

Der Stator 12 besteht aus einem die Längsrichtung (Doppelpfeil A in Fig. 1) des Linear-Motors 10 definierenden Kern 22, auf den abwechselnd die Wickelspulen 16 sowie Polzahnscheiben 24 aufgeschoben sind. Der Kern 22 ist zur Reduzierung von Wirbelstromverlusten als Metall-Blechpaket ausgebildet aus einzelnen, sich in Längsrichtung A erstreckenden Transformator-Blechstreifen 26 mit gleichem rechteckigem Umriß. Die in den Fig. 3 und 4 geschnitten angedeuteten Blechstreifen 26 liegen fluchtend übereinander, so daß sich der in Fig. 4 ersichtliche rechteckige Kernquerschnitt ergibt. Aufgrund dieser Laminierung kann der Kern und somit der gesamte Stator ohne weiteres um eine zur Ebene der Metallbleche 26 parallele und zur Längsrichtung A senkrechte Krümmungsachse gekrümmt werden.

Die Polzahnscheiben 24 sind ebenfalls als Metall-Blechpakete ausgebildet, wobei die Blechebene quer zur Längsrichtung A liegt. Da die axiale Länge (parallel zur Richtung A) der jeweiligen Polzahnscheibe 24 kleiner ist als jede der beiden anderen Dimensionen der Polzahnscheibe, ergibt sich aufgrund dieser Blechungsrichtung ein Minimum an Einzelblechen 28. Jedes Einzelblech 28 hat rechtförmigen, insbesondere quadratischen Umriß mit einer dem rechteckigen Kernquerschnitt angepaßten Zentralöffnung 30.

Um den Kern 22 umkreisende Wirbelströme in den Einzelblechen 28 von vorneherein auszuschließen, sind sämtliche Einzelbleche 28 an der gleichen Stelle aufgeschnitten zur Bildung eines in Längsrichtung A durchgehenden Schlitzes 32 der jeweiligen Polzahnscheibe 24. Diese Schlitz mündet in die durch die Zentralöffnungen 30 der Einzelbleche 28 definierte Kern-Aufnahmeöffnung 34 der Polzahnscheibe 24.

Dieser Schlitz 32 ist an einer Stelle angebracht, die nicht dem Arbeitsluftspalt zwischen dem Stator und den magnetisch aktiven Teilen des Läufers zugewandt ist. Diese magnetisch aktiven Teile sind im Falle des Synchron-Motors die Magneten 20 und im Falle eines Asynchron-Motors die entsprechende elektrisch leitfähige Reaktionsschiene.

Die Polzahnscheiben 24 lassen sich in einfacher Weise vorfertigen. Hierzu müssen lediglich die Einzelbleche 28 insbesondere durch Stanzen geformt und in entsprechender Anzahl aufeinandergelegt werden. Zur gegenseitigen Fixierung kann dann, dem Schitz 32 gegenüber, eine in Längsrichtung A verlaufende Verbindungsschweißnaht 36 (Fig. 4) gelegt werden.

Ein weiterer entscheidender Vorteil der Schlitze 32 liegt darin, daß diese zur Aufnahme von Zuleitungen der Wickelspulen geeignet sind. Dies ist in den Fig. 3 und 4 angedeutet. Zudem kann der Raum zwischen aufeinanderfolgenden Zahnscheiben 24 vollständig für die jeweilige Teilwicklung genutzt werden, da die Zuleitung zum innenliegenden Wickelanfang durch den Schlitz hindurch unmittelbar an die Wicklung herangeführt werden kann. Wird, wie in den Fig. 3 und 4 dargestellt, ein die Vormontage der einzelnen Wickelspulen 16 erleichtender Wickelträger 40 eingesetzt, der eine an den Kernquerschnitt angepaßte Durchgangsöffnung 42 aufweist und eine nach außen offene Wickelnut 44 bildet, so kann die besagte Zuleitung 46 durch eine dementsprechend weit radial innenliegende Durchgangsöffnung 50 einer entsprechenden Seitenwand 48 des Wickelträgers zum innenliegenden Wickelanfang geführt werden. Die Nut 44 kann daher voll bewickelt werden. Die übrigen in den Schlitz 32 eingelegten Zuleitungen sind in den Fig. 3 und 4 generell mit 52 bezeichnet.

Die beschriebene Anordnung der Wicklung als hintereinander auf den Kern geschobene verdrahtete Wickelspulen mit Verbindung phasengleicher Wickelspulen lediglich über die beiden Zuleitungen vermeidet die bei bekannten Statoren üblichen Wickelköpfe. Der Herstellungs- und Materialaufwand ist dementsprechend reduziert mit dem weiteren Vorteil, daß auch eine kleine Polteilung (Anzahl der Wickelspulen pro Stator-Längeneinheit) ohne großen Aufwand erreicht werden kann. Auch ist der Stator sehr kompakt und kann somit ohne weiteres auch in Blech eingekapselt und damit hermetisch abgedichtet und gegen Umwelteinflüsse geschützt werden. Hierzu ist gemäß den Fig. 3 und 4 ein Stator-Gehäuse 54 vorgesehen aus einem Vierkantrohr 56 mit Deckel 58 an beiden Enden. In dieses Rohr 56 wird die komplette verdrahtete Einheit aus Kern 22, Wickelspulen 16 und Polzahnscheiben 24 eingeschoben und ausgegossen. Das hierzu eingesetzte Kunstharzmaterial 60 ist in den Fig. 3 und 4 durch Punkte angedeutet. Das Gehäuse wird durch Anlöten oder Anschweißen der Deckel 58 hermetisch geschlossen.

Als Material für das Gehäuse kommt unmagnetisches Material infrage, um den Magnetfluß nicht zu behindern. Es hat sich darüber hinaus in Messungen herausgestellt, daß ein elektrisch leitfähiges Material, wie z.B. Stahl, am besten V2A-Stahl, die Selbstinduktivität der Antriebswicklung des Stators stark reduziert. Im Falle der Verwendung eines V2A-Gehäuses mit einer Wandstärke von 1 mm wurde eine Reduktion der Selbstinduktion von 5,1 mH auf 1,7 mH (Milli-Henry) gemessen. Die Messung erfolgte auf folgende Weise:

Eine Einzelspule eines kompletten Stators wurde an ein Induktivitätsmeßgerät (Volt-craft 4090) angeschlossen; die übrigen Einzelspulen waren offen. Die Induktivität des Stators außerhalb des V2A-Gehäuses wurde mit der des in das Gehäuse eingeschobenen Stators verglichen.

Diese Reduzierung der Selbstinduktion vermindert die notwendige Schaltleistung der Antriebselektronik und erhöht den Induktionsstrom bei kurzgeschlossener Stator-Antriebswicklung und somit die Bremswirkung bei entsprechenden Asynchron-Bremsbetrieb.

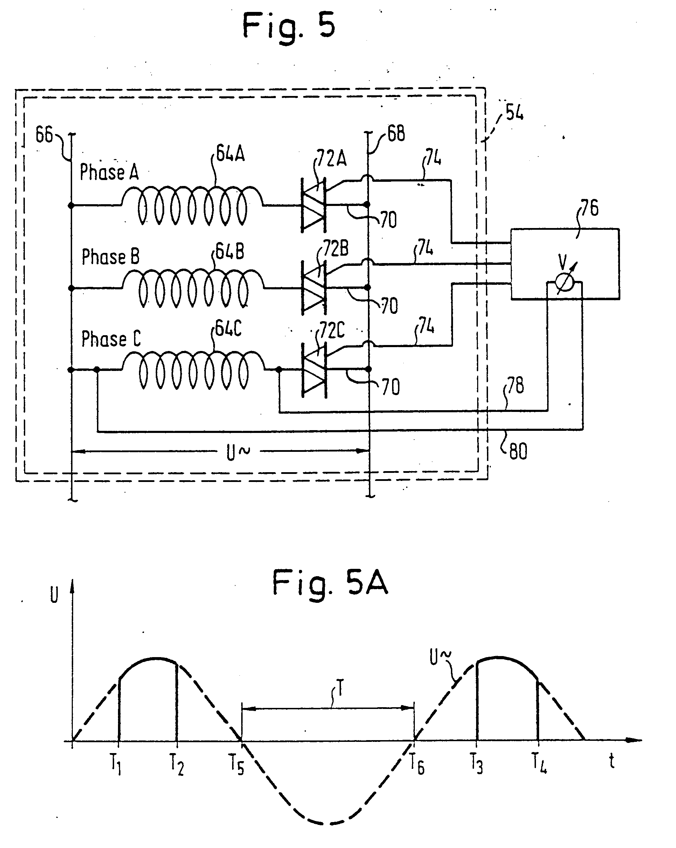

In das Stator-Gehäuse 54 kann zusätzlich die zur Energieversorgung der Phasen erforderlich Leistungselektronik eingebaut werden. Ein entsprechendes Schaltschema ist in Fig. 5 angedeutet. Man erkennt die den einzelnen Phasen zugeordnete Phasenwicklung 64A bzw. 64B oder 64C, die sich gemäß Fig. 2 wiederum auf die Wicklungen der Einzelspulen 16A bzw. 16B bzw. 16C aufteilt. Alle Phasenwicklungen 64A, 64B, 64C sind in Parallelschaltung an zwei Spannungsversorgungsleitungen 66,68 geschaltet, an denen die Antriebswechselspannung U_{∼} anliegt. In jede Verbindungsleitung 70 zwischen Phasenwicklung 64 und Leitung 68 ist jeweils ein gesteuerter elektronischer Schalter in Form eines Triacs 72 eingesetzt, der jeweils über eine Steuerleitung 74 mit einer elektronischen Steuereinheit 76 verbunden sind. Die Steuerung 76 veranlaßt nun, daß entsprechend der Phasenlage des Linear-Motors zum gewünschten Zeitpunkt die betreffende Phasenwicklung mit Spannung versorgt wird. Wie bereits erwähnt, kann die von den Triacs 72 gebildete Leistungsschaltelektronik mit eingekapselt werden - das Stator-Gehäuse 54 ist mit strichlierter Umrißlinie angedeutet. Die Leitungen 66,68 und 74 müssen nur mehr abgedichtet aus dem Stator-Gehäuse 54 herausgeführt werden.

Um in besonders einfacher und dabei zuverlässiger Weise die Phasenlage des Linearmotors feststellen zu können, wird in einer Strompause einer Phasenwicklung die von den Läufermagneten in dieser Phasenwicklung induzierte Spannung gemessen. Diese Vorgehensweise ist besonders vorteilhaft bei Halbwellenbetrieb, da dann stets die erforderliche Meßzeit zur Verfügung steht.

Dies wird nun anhand von Fig. 5A kurz erläutert. Man erkennt den mit strichlierter Linie angedeuteten Spannungsverlauf der an den Leitungen 66,68 anliegenden Wechselspannung. Durch entsprechende Ansteuerung, beispielsweise des Triacs 72C, wird der Phasenwicklung 64C zwischen den Zeitpunkten T1 und T2 sowie zwischen den Zeitpunkten T3 und T4 die momentane Spannung U∼ zugeführt, ansonsten jedoch nicht. Die Zuschaltung erfolgt jeweils während einer positiven Halbwelle. Die Zeitpunkte T1, T2, T3 und T4 werden entsprechend der momentanen Phasenlage durch die Steuerung 76 festgelegt. Während der negativen Halbwelle zwischen den Zeitpunkten des jeweiligen Null-Durchgangs T5 und T6 erfolgt in keinem Falle eine Spannungsbeaufschlagung der phasenwicklung 64C. Dieser Zeitraum steht daher voll zur Messung der von den Läufermagneten in der Phasenwicklung 64C induzierten Spannung zur Verfügung. In Fig. 5 sind Spannungsabgriffsleitungen 78,80 angedeutet, die in die Steuerung 76 zur dortigen Spannungsmessung geführt sind.

Die Strompause zwischen den Zeitpunkten T₅ und T₆ wird auch deshalb zuverlässig von der Leistungselektronik eingehalten, weil die eingesetzten Triacs oder auch Thyristoren bei Null-Durchgang des Stroms selbsttätig löschen.

Der erfindungsgemäße Stator kann in einer Vielzahl von Stator-Läuferanordnungen mit Vorteil eingesetzt werden, so z.B. in die in Fig. 8 und 4 schematisch dargestellte Anordnung mit den Stator 12 zweiseitig umfassendem Läufer.

In Fig. 8, links ist ein erstes Läuferteil 18A mit einer ersten Gruppe von Permanentmagneten 20 angedeutet und rechts neben dem Stator 12 ein zweites Läuferteil 18B mit Magneten 20 entgegengesetzter Polorientierung. Rückseitig sind die Permanentmagnete 20 jeder Gruppe jeweils durch ein magnetisches Rückschlußblech 83 miteinander verbunden. Beide Läuferteile sind in Fig. 8 in nicht dargestellter Weise mechanisch starr miteinander verbunden, beispielsweise durch eine in Fig. 4 angedeutete Brücke 84. Die im Querschnitt gemäß Fig. 4 U-förmige Brücke 84 des Läufers 18 stützt sich auf einem Untergrund 86 ab, beispielsweise mit Hilfe spurgeführter Laufräder 88. Der Schlitz 32 verläuft in Fig. 8 und Fig. 4 nach oben, so daß die den Läuferteilen 18A,18B zugewandten Statorseiten ungeschwächt sind. Während des Betriebes treten zwischen jedem Läuferteil 18A,18B und dem Stator 12 Anziehungskräfte auf, die ein Vielfaches der Vortriebskraft sind. Aufgrund der zweiseitigen Umgreifung des Stators 12 heben sich zumindest in der exakten Neutrallage des Läufes 18 (= symmetrisch zum Stator 22) diese Anziehungskräfte gegenseitig auf. Die Läuferführung (hier als Spurführung symbolisiert) muß daher nur Differenzkräfte bei Abweichungen von der Neutrallage aufnehmen, wie sie z.B. durch Fertigungstoleranzen entstehen. Ferner ergibt sich aufgrund der zweiseitigen Überdeckung von Läufer und Stator eine hohe Ausnutzung der erzeugten Magnetflüsse mit dementsprechend hoher Vortriebseffektivität.

In Fig. 6 ist eine vereinfachte Läufer-Statoranordnung dargestellt mit lediglich einseitigem Läufer 18. Die Fahrtrichtung ist senkrecht zur Zeichenebene. In Fahrtrichtung gesehen wechselt die Polrichtung der Dauermagnete 20 in regelmäßigen Abständen entsprechend der Polteilung. Auf der vom Stator abgelegenen Seite ist wiederum ein magnetisches Rückschlußblech 83 vorgesehen.

Die Polzahnform der Anordnung gemäß Fig. 6 läßt sich gemäß Figur. 7 dadurch verbessern, daß anstelle des rechteckigen Polzahnscheibenumrisses ein trapezförmiger Umriß gewählt wird, wobei die größere der beiden Parallel-Linien, die Trapezbasis 92, dem Läufer 18 zugewandt ist und der Schlitz 32 auf der gegenüberliegenden kurzen Seite angeordnet ist. Diese Formgebung verringert den Streufluß sowie die Induktivität des Stators 12. Außerdem ergibt sich eine beträchtliche Reduzierung des Gewichts.

Die Ausführungsform gemäß Fig. 9 unterscheidet sich von der bereits beschriebenen gemäß Fig. 8 dadurch, daß der Läufer 18 den Stator 12 nunmehr derart umgreift, daß drei Statorseiten mit entsprechenden Gruppen von Magneten 20A, 20B und 20C zusammenwirken. Diese Magnetgruppen sind wiederum durch eine in Fig. 9 nicht dargestellte Brücke miteinander starr verbunden. Diese Anordnung zeichnet sich durch verbesserte Ausnutzung der magnetischen Flüsse aus, wenn auch die zwischen der mittleren Gruppe von Magneten 20C und dem Stator 12 wirkenden Anziehungskräfte in anderer Weise kompensiert werden müssen. So können diese zur Vergrößerung der Ausspursicherheit bei spurkranzgeführten Fahrzeugen dienen oder zur Entlastung der Gewichtskraft.

Für den Bau von besonders leichten Fahrzeugen kann das magnetische Rückschlußblech entfallen. Der magnetische Rückschluß wird dann durch einen zweiten Stator erreicht, der dem ersten gegenüberliegt mit dazwischenliegendem Läufer. Eine derartige Anordnung ist in Fig. 10 dargestellt mit linkem Stator 12A, rechtem Stator 12B und dazwischenliegendem Läufer 18. Werden beide Statoren als aktive Statoren mit dementsprechender Energieversorgung ausgeführt, dann verdoppelt sich die Schubkraft. Mit Vorteil können hier die Statoren die anhand von Fig. 7 beschriebene trapezartige Umrißform der Polzahnscheiben aufweisen. Die Anziehungskräfte werden aufgrund der symmetrischen Anordnung sehr gut gegenseitig kompensiert, so daß sich die Belastung für die Führungselemente auf ein Minimum reduziert.

Eine besonders kompakte Bauform ergibt die in Fig. 11 angedeutete konzentrische Anordnung mit zentralem, im Umriß angenähert kreisförmigem Stator 12 mit in Fig. 11 nach oben weisendem Schlitz 32 zur Unterdrückung von Kurzschlußströmen. Auf diesen Kern werden entsprechend den vorstehenden Ausführungsformen abwechselnd Polzahnpakete und Antriebsspulen aufgeschoben. Der Kern kann aus Transformatorblechen gebildet sein oder, wie dargestellt, einer Vielzahl von sich in Längsrichtung des Motors (senkrecht zur Zeichenebene der Fig. 1) erstreckenden Eisenstäben 94. Der angenähert kreisringförmige Läufer 18 umringt den Stator 12 mit gewissem Arbeitsabstand. An dem äußeren, ein magnetisches Rückschlußblech bildenden Eisenrücken 96 sind die nach innen ragenden Dauermagnete 20 angebracht. Diese wechseln, in Fahrtrichtung gesehen, abwechselnd ihre Polung radial nach innen oder radial nach außen. Im dargestellten Ausführungsbeispiel ergeben die Magnete 20 jeweils einen Magnetring aus planflächigen Segmenten. Diese Bauweise verursacht die geringsten Kosten. Der Läufer 18 ist im dargestellten Ausführungsbeispiel oben geschlitzt, um den Durchtritt für nicht dargestellte, radial nach außen führende Stator-Halterungen zu ermöglichen. Bei relativ kurzem Stator kann dieser auch ausschließlich an seinen beiden Enden gehaltert werden, so daß der Läufer 18 den Stator vollständig umringend ausgebildet sein kann.

Die erfindungsgemäß ausgebildeten Statoren lassen sich mit Vorteil auch bei Asynchron-Motoren oder -Generatoren einsetzen. Einige Anwendungsbeispiele sind in den Fig. 12 bis 15 angegeben.

In der Ausführungsform gemäß Fig. 12 sind ähnlich der Ausführungsform gemäß Fig. 10 wiederum zwei aktive Statoren 12A und 12B vorgesehen, zwischen denen jedoch anstelle eines Permanentmagnete tragenden Läufers 18 ein Läufer 18′ in Form einer Reaktionsschiene (= elektrisch gut leitfähiges Blech, insbesondere Kupferblech) vorgesehen. Diese Anordnung entspricht einer DoppelkammAsynchron-Anordnung.

Die Ausführungsform gemäß Fig. 13 entspricht einer Einzelkamm-Anordnung, die sich durch Vereinfachung des Aufbaus auszeichnet. Es ist also lediglich ein einziger Stator 12 vorgesehen, der hier die bevorzugte Trapez-Umrißform aufweist. Der Trapezbasis 92 gegenüber liegt wiederum der Läufer 18′ in Form einer Reaktionsschiene. Zur Verbesserung der magnetischen Flußführung befindet sich am Rücken der Reaktionsschiene ein sogenanntes Rückschlußblech 98 aus ferromagnetischem Material.

Ist ein besonders leichter Läufer 18′ gewünscht, so kann mit Vorteil die Anordnung gemäß Fig. 14 eingesetzt werden. Diese unterscheidet sich von der gemäß Fig. 13 dadurch, daß das Rückschlußblech 98 nunmehr ebenso wie der Stator 12 ortsfest ist. Lediglich der dazwischen angeordnete Läufer 18′ ist beweglich.

Die Ausführungsform gemäß Fig. 15 entspricht der gemäß Fig. 9. Auch hier werden drei Seiten des Stators 12 zum magnetischen Vortrieb ausgenutzt. Der Läufer 18′ hat dementsprechend U-Form mit dem Stator 12 gegenüberliegender, U-förmiger Reaktionsschiene und U-förmigem Rückschlußblech 98 auf der Außenseite.

Eine weitergehende Umschließung des Stators, beispielsweise gemäß Fig. 11, ist ebenfalls denkbar. Auf die Ausführungen zu Fig. 11 wird verwiesen.

Ein wichtiger Vorteil der erfindungsgemäßen Stator-Ausbildung liegt darin, daß der Stator-Kern 22 nur für relativ geringen maximalen magnetischen Fluß auszulegen ist. Die Abszisse der Darstellung gemäß Fig. 16 beschreibt den Ort in Fahrtrichtung und die Ordinate den magnetischen Fluß im Kernbereich. Die Kurve K1 beschreibt den Verlauf des magnetischen Flusses, den die Magnete des Läufers am Kernort erzeugen. Die Kurve K2 beschreibt dementsprechend den Verlauf des von den Wicklungen des Stators selbst am Kernort erzeugten magnetischen Flusses. Man stellt fest, daß sowohl der vom Läufer als auch der von den Wicklungen erregte Fluß eine oszillierende Kurve beschreibt. Die Null-Stellen, in denen der magnetische Fluß das Vorzeichen wechselt, sind jeweils eine Polteilung voneinander entfernt. Die Lage der beiden Flußkurven zueinander ändert sich je nach Relativstellung zwischen Läuferposition und Spulenbestromung. Der als Schubwinkel bezeichnete Phasenwinkel zwischen beiden Kurven beträgt +90°, wenn die höchste Vortriebskraft erzielt werden soll und -90°, wenn die größte Bremskraft erzeugt werden soll. An dieser Stelle trifft ein Maximum der einen Kurve gerade mit einem Null-Durchgang der anderen Kurve zusammen, wie dies in Fig. 16 dargestellt ist. Der Statorkern muß demnach lediglich so dimensioniert werden, daß das absolute Maximum der beiden magnetischen Flüsse (in Fig. 6 mit Φₘₐₓ bezeichnet) ohne Überlastung des Kernmaterials durch den Kern geführt werden kann. Eine Auslegung auf die Summe Φ₁ + Φ₂ der beiden Maxima Φ₁ und Φ₂ ist nicht erforderlich. Der Kernquerschnitt kann dementsprechend klein dimensioniert werden.

## Patentansprüche

1. Stator (12) für einen Linear-Motor oder -Generator (10) mit einem relativ zum Stator (12) bewegbaren Läufer (18),
wobei der Stator (12) mit wenigstens einer Antriebswicklung versehen ist, welche wenigstens eine Wickelspule (16) umfaßt, und
wobei der Stator (12) einen zur Längsrichtung (A) des Linear-Motors oder -Generators (10) parallel verlaufenden länglichen Kern (22) aufweist, auf welchen die Wickelspulen (16) sowie zwischen aufeinanderfolgenden Wickelspulen (16) angeordnete Polzahnscheiben (24) aufgeschoben sind,
**gekennzeichnet durch** ein den Kern (22) samt Wickelspulen (16) und Polzahnscheiben (24) aufnehmendes Statorgehäuse (54) aus im wesentlichen unmagnetischem, zur Reduzierung der Stator-Induktivität elektrisch leitfähigem, korrosionsfestem Stahl als Gehäusematerial, wobei das Statorgehäuse (54) den Stator (12) wenigstens an einer dem Läufer (18) zugewandten Seite umgibt.

2. Stator nach Anspruch 1, **dadurch gekennzeichnet**, daß der Scheibenumriß der Polzahnscheiben (24) angenähert trapezförmig ist mit dem Läufer (18) zugewandter Trapezbasis.

3. Stator (12) für einen Linear-Motor oder -Generator (10) mit einem relativ zum Stator (12) bewegbaren Läufer (18),
wobei der Stator (12) mit wenigstens einer Antriebswicklung versehen ist, welche wenigstens eine Wickelspule (16) umfaßt, und
wobei der Stator (12) einen zur Längsrichtung (A) des Linear-Motors oder -Generators (10) parallel verlaufenden länglichen Kern (22) aufweist, auf welchen die Wickelspulen (16) sowie zwischen aufeinanderfolgenden Wickelspulen (16) angeordnete Polzahnscheiben (24) aufgeschoben sind,
**dadurch gekennzeichnet**, daß der Scheibenumriß der Polzahnscheiben (24) angenähert trapezförmig ist mit dem Läufer (18) zugewandter Trapezbasis.

4. Stator nach Anspruch 3, **gekennzeichnet durch** ein den Kern (22) samt Wickelspulen (16) und Polzahnscheiben (24) aufnehmendes Statorgehäuse (54) aus im wesentlichen unmagnetischem Gehäusematerial.

5. Stator nach Anspruch 4, **dadurch gekennzeichnet**, daß das Statorgehäuse (54) den Stator (12) wenigstens an einer dem Läufer (18) zugewandten Seite umgibt.

6. Stator nach Anspruch 5, **dadurch gekennzeichnet**, daß das Statorgehäuse (54) den Stator (12) vollständig umschließt.

7. Stator nach einem der Ansprüche 4 bis 6, **dadurch gekennzeichnet**, daß das Gehäusematerial zur Reduzierung der Stator-Induktivität elektrisch leitfähig ist.

8. Stator nach Anspruch 7, **dadurch gekennzeichnet**, daß das Gehäusematerial korrosionsfester Stahl ist.

9. Stator nach einem der Ansprüche 1, 2 und 8, **dadurch gekennzeichnet**, daß das Gehäusematerial V2A-Stahl ist, vorzugsweise mit einer Wandstärke zwischen 0,2 bis 2 mm, besser 0,5 bis 1,5 mm, am besten von etwa 1 mm.

10. Stator nach einem der Ansprüche 1, 2 und 4 bis 9, **dadurch gekennzeichnet**, daß das Statorgehäuse (54) mit Kunstharz oder dergleichen ausgegossen ist.

11. Stator nach einem der Ansprüche 1, 2 und 4 bis 10, **dadurch gekennzeichnet**, daß im Statorgehäuse (54) elektronische Schaltelemente (72) zur gesteuerten Spannungsversorgung der Wickelspulen (16) angeordnet sind.

12. Stator nach einem der Ansprüche 1 bis 11, **dadurch gekennzeichnet**, daß der Kern (22) von einem Kern-Metallblechpaket aus in Längsrichtung (A) des Kerns sich erstreckenden Blechstreifen (26) gebildet ist.

13. Stator nach einem der Ansprüche 1 bis 12, **dadurch gekennzeichnet**, daß die Polzahnscheiben (24) jeweils von einem Polzahn-Metallblechpaket gebildet sind aus senkrecht zur Längsrichtung des Kerns angeordneten Blechscheiben (28).

14. Stator nach Anspruch 13, **dadurch gekennzeichnet**, daß die Polzahn-Blechpakete jeweils mit einem in Längsrichtung (A) durchgehenden und in eine Kern-Aufnahmeöffnung (34) des Blechpakets einmündenden Schlitz (32) versehen sind.

15. Stator nach Anspruch 14, **dadurch gekennzeichnet**, daß die Blechscheiben (28) im Umriß im wesentlichen U-förmig ausgebildet sind.

16. Stator nach Anspruch 14 oder 15, **dadurch gekennzeichnet**, daß der Schlitz (32) auf einer vom Läufer (18) abgewandten Statorseite angeordnet ist.

17. Stator nach einem der Ansprüche 14 bis 16, **dadurch gekennzeichnet**, daß auf der dem Schlitz (32) gegenüberliegenden Seite des Polzahn-Blechpakets eine Schweißnaht (36) zur Verbindung der Blechscheiben (28) vorgesehen ist.

18. Stator nach einem der Ansprüche 14 bis 17, **dadurch gekennzeichnet**, daß Zuleitungen (46,50) der Wickelspulen (16) in die Schlitze (32) eingelegt sind.

19. Stator nach einem der Ansprüche 14 bis 18, **dadurch gekennzeichnet**, daß eine zu einem innenliegenden Wickelanfang einer Wickelspule (16) führende Zuleitung (46) durch eine dementsprechend weit innen liegende Durchgangsöffnung (50) einer Seitenwand (48) eines Wickelträgers (40) geführt ist.

20. Stator nach einem der Ansprüche 1 bis 19, **dadurch gekennzeichnet**, daß die Wickelspulen an einen Direkt-Umrichter zur elektrischen Leitungsversorgung angeschlossen sind.

21. Stator nach Anspruch 20, **dadurch gekennzeichnet**, daß der Direkt-Umrichter Triacs (72) oder Thyristoren umfaßt.

22. Stator nach einem der Ansprüche 1 bis 21, **gekennzeichnet** net durch wenigstens einen Sensor zur Pollagefeststellung durch Messung der von den Läufer-Magneten in einer Wickelspule (16) erzeugten Induktionsspannung.

23. Linear-Motor oder -Generator (10) mit einem Stator (12) nach einem der Ansprüche 1 bis 22 und einem relativ zum Stator (12) bewegbaren Läufer (18), an welchem wenigstens eine Reaktionsschiene oder Gruppe von Magneten angebracht ist.

24. Linear-Motor oder -Generator nach Anspruch 23, **dadurch gekennzeichnet**, daß der Läufer (18) den Stator (12) umgreift, und daß an dem Läufer (18) zwei einander gegenüberliegende Reaktionsschienen oder Gruppen von Magneten angebracht sind, zwischen denen der Stator (12) angeordnet ist.

25. Linear-Motor oder -Generator nach Anspruch 24, **dadurch gekennzeichnet**, daß am Läufer (18) eine dritte Reaktionsschiene oder Gruppe von Magneten angebracht ist, die einer weiteren Seite des Stators gegenüberliegt.

26. Linear-Motor oder -Generator nach einem der Ansprüche 23 bis 25, **dadurch gekennzeichnet**, daß der Läufer (18) den Stator (12) wenigstens angenähert kreisförmig teilweise oder vollständig umschließt (Fig. 11).

27. Linear-Motor oder -Generator nach einem der Ansprüche 23 bis 26, **dadurch gekennzeichnet**, daß die Magnete sämtlicher Gruppen jeweils über eine magnetische Rückschluß-Leiste (90) miteinander verbunden sind.

28. Linear-Motor oder -Generator nach einem der Ansprüche 23 bis 26, **dadurch gekennzeichnet**, daß auf der vom Läufer (18) abgewandten Seite der Reaktionsschiene (22′) ein statorfestes oder läuferfestes magnetisches Rückschlußblech (98) vorgesehen ist.

29. Linear-Motor oder -Generator nach einem der Ansprüche 23 bis 28, **dadurch gekennzeichnet**, daß sowohl wenigstens eine Reaktionsschiene als auch wenigstens eine Gruppe von Magneten am Läufer vorgesehen sind.

30. Linear-Motor oder -Generator nach einem der Ansprüche 23 bis 29 mit einem Stator nach Anspruch 12, **dadurch gekennzeichnet**, daß zur Bereitstellung eines Linear-Motors (10) mit wenigstens abschnittsweise gebogenem Fahrweg der Stator (12) dementsprechend gebogen ausgebildet ist mit Abbiegung um eine zur Metallblechebene des Metallblechpakets parallele Biegeachse.

31. Verfahren zur Pollagenmessung bei einem Linear-Motor oder -Generator nach einem der Ansprüche 23 bis 30, **dadurch gekennzeichnet**, daß man während einer Strompause einer Antriebswicklung des Stators die in diese Antriebswicklung von den Läufermagneten erzeugte Induktionsspannung mißt und der Pollageermittlung zugrunde legt.

## Claims

1. Stator (12) for a linear motor or generator (10) with a rotor (18) movable relative to the stator (12), wherein the stator (12) is provided with at least one driving winding comprising at least one winding coil (16), and wherein the stator (12) has an elongate core (22) which extends parallel to the longitudinal direction (A) of the linear motor or generator (10) and on to which the winding coils (16) as well as pole toothed plates (24) arranged between successive winding coils (16) are slipped, characterised by a stator casing (54) which receives the core (22) together with winding coils (16) and pole toothed plates (24) and consists of substantially non-magnetic corrosion-resistant steel as casing material which is electrically conductive to reduce the stator inductance, wherein the stator casing (54) surrounds the stator (12) at least on a side facing the rotor (18).

2. Stator according to Claim 1, characterised in that the plate contour of the pole toothed plates (24) is substantially trapezoidal with a trapezium base facing the rotor (18).

3. Stator (12) for a linear motor or generator (10) with a rotor (18) movable relative to the stator (12), wherein the stator (12) is provided with at least one driving winding comprising at least one winding coil (16), and wherein the stator (12) has an elongate core (22) which extends parallel to the longitudinal direction (A) of the linear motor or generator (10) and on to which the winding coils (16) as well as pole toothed plates (24) arranged between successive winding coils (16) are slipped, characterised in that the plate contour of the pole toothed plates (24) is substantially trapezoidal with a trapezium base facing the rotor (18).

4. Stator according to Claim 3, characterised by a stator casing (54) which receives the core (22) together with winding coils (16) and pole toothed plates (24) and consists of substantially non-magnetic casing material.

5. Stator according to Claim 4, characterised in that the stator casing (54) surrounds the stator (12) at least on a side facing the rotor (18).

6. Stator according to Claim 5, characterised in that the stator casing (54) completely surrounds the stator (12).

7. Stator according to one of Claims 4 to 6, characterised in that the casing material is electrically conductive to reduce stator inductance.

8. Stator according to Claim 7, characterised in that the casing material is corrosion-resistant steel.

9. Stator according to one of Claims 1, 2 and 8. characterised in that the casing material is V2A-steel, preferably with a wall thickness of between 0.2 and 2 mm, preferably 0.5 and 1.5 mm, most preferably about 1 mm.

10. Stator according to one of Claims 1, 2 and 4 to 9, characterised in that the stator casing (54) is poured with synthetic resin or the like.

11. Stator according to one of Claims 1, 2 and 4 to 10, characterised in that electronic switching elements (72) for the controlled supply of voltage to the winding coils (16) are arranged in the stator casing (54).

12. Stator according to one of Claims 1 to 11, characterised in that the core (22) is formed by a sheet metal strip (26) extending from a core/sheet metal stack in the longitudinal direction (A) of the core.

13. Stator according to one of Claims 1 to 12, characterised in that the pole toothed plates (24) are each formed by a pole tooth/sheet metal stack from sheet metal plates (28) arranged perpendicularly to the longitudinal direction of the core.

14. Stator according to Claim 13, characterised in that the pole tooth/sheet metal stacks are each provided with a slot (32) passing in the longitudinal direction (A) and opening into a core receiving orifice (34) of the sheet metal stack.

15. Stator according to Claim 14, characterised in that the sheet metal plates (28) are substantially U-shaped in contour.

16. Stator according to Claim 14 or 15, characterised in that the slot (32) is arranged on a side of the stator remote from the rotor (18).

17. Stator according to one of Claims 14 to 16, characterised in that a weld seam (36) is provided for connecting the sheet metal plates (28) on the side of the pole toothed sheet metal stack opposed to the slot (32).

18. Stator according to one of Claims 14 to 17, characterised in that feed lines (46,50) of the winding coils (16) are laid into the slots (32).

19. Stator according to one of Claims 14 to 18, characterised in that a feed line (46) leading to an internal coil start of a winding coil (16) is guided through a through-orifice (50), located correspondingly far in, of a lateral wall (48) of a winding carrier (40).

20. Stator according to one of Claims 1 to 19, characterised in that the winding coils are attached to a direct converter for the electric line supply.

21. Stator according to Claim 20, characterised in that the direct converter comprises triacs (72) or thyristors.

22. Stator according to one of Claims 1 to 21, characterised by at least one sensor for determining the pole position by measuring the induction voltage generated in a winding coil (16) by the rotor magnet.

23. Linear motor or generator (10) with a stator (12) according to one of Claims 1 to 22 and a rotor (18) which is movable relative to the stator (12) and on which at least one reaction rail or group of magnets is arranged.

24. Linear motor or generator according to Claim 23, characterised in that the rotor (18) surrounds the stator (12) and that two mutually opposed reaction rails or groups of magnets, between which the stator (12) is disposed, are arranged on the rotor (18).

25. Linear motor or generator according to Claim 24 characterised in that a third reaction rail or group of magnets which faces a further side of the stator is arranged on the rotor (18).

26. Linear rotor or generator according to one of Claims 23 to 25, characterised in that the rotor (18) partially or completely surrounds the stator (12) at least substantially in the form of a circle (Figure 11).

27. Linear motor or generator according to one of Claims 23 to 26, characterised in that the magnets of all groups are each connected to one another by a magnetic return strip (90).

28. Linear motor or generator according to one of Claims 23 to 26, characterised in that a stator-rigid or rotor-rigid magnetic return metal sheet (98) is provided on the side of the reaction rail (22′) remote from the rotor (18).

29. Linear motor or generator according to one of Claims 23 to 28, characterised in that at least one reaction rail as well as at least one group of magnets are provided on the rotor.

30. Linear motor or generator according to one of Claims 23 to 29 with a stator according to Claim 12, characterised in that, for preparation of a linear motor (10) with an at least intermittently curved path of travel, the stator (12) is correspondingly curved in design with a bend round a bending axis parallel to the plane of the sheet metal of the sheet metal stack.

31. Method of measuring the pole position in a linear motor or generator according to one of Claims 23 to 30, characterised in that during a break in current of a driving winding of the stator, the induction voltage generated in this driving winding by the rotor magnets is measured and is used as a basis for determining the pole position.

## Revendications

1. Stator (12) pour un moteur linéaire ou un générateur linéaire (10) pourvu d'un induit (18) mobile par rapport au stator (12), dans lequel le stator (12) est pourvu d'au moins un enroulement d'entraînement qui comprend au moins une bobine (16), et dans lequel le stator (12) présente un noyau (22) allongé mobile parallèlement à l'axe longitudinal (A) du moteur ou générateur linéaire (10), sur lequel sont enfilées les bobines (16) ainsi que des plaques formant des dents polaires (24) disposées entre des bobines (16) successives, caractérisé en ce qu'il comporte un boîtier de stator (54) dont le matériau est un acier essentiellement non magnétique, conducteur électrique pour réduire l'inductance du stator et résistant à la corrosion, qui reçoit le noyau (22) avec les bobines (16) et les plaques formant des dents polaires (24), le boîtier de stator (54) entourant le stator (12) au moins sur un côté orienté vers l'induit (18).

2. Stator selon la revendication 1, caractérisé en ce que le contour des plaques formant des dents polaires (24) est sensiblement trapézoïdal avec la base du trapèze orientée vers l'induit (18).

3. Stator (12) pour un moteur linéaire ou un générateur linéaire (10) pourvu d'un induit (18) mobile par rapport au stator (12), dans lequel le stator (12) est pourvu d'au moins un enroulement d'entraînement qui comprend au moins une bobine (16), et dans lequel le stator (12) présente un noyau (22) allongé mobile parallèlement à l'axe longitudinal (A) du moteur ou générateur linéaire (10), sur lequel sont enfilées les bobines (16) ainsi que des plaques formant des dents polaires (24) disposées entre des bobines (16) successives, caractérisé en ce que le contour des plaques formant des dents polaires (24) est sensiblement trapézoïdal avec la base du trapèze orientée vers l'induit (18).

4. Stator selon la revendication 3, caractérisé en ce qu'il comporte un boîtier de stator (54) en matériau essentiellement non magnétique qui reçoit le noyau (22) avec les bobines (16) et les plaques formant des dents polaires (24).

5. Stator selon la revendication 4, caractérisé en ce que le boîtier de stator (54) entoure l'induit (18) sur au moins un côté orienté vers l'induit (18).

6. Stator selon la revendication 5, caractérisé en ce que le boîtier de stator (54) entoure complètement le stator (12).

7. Stator selon l'une quelconque des revendications 4 à 6, caractérisé en ce que le matériau du boîtier est conducteur électrique en vue de réduire l'inductance du stator.

8. Stator selon la revendication 7, caractérisé en ce que le matériau de boîtier est un acier résistant à la corrosion.

9. Stator selon l'une quelconque des revendications 1, 2 et 8, caractérisé en ce que le matériau du boîtier est de l'acier V2A, de préférence d'une épaisseur comprise entre 0,2 et 2 mm, plus particulièrement 0,5 à 1,5 mm, et mieux encore de 1 mm environ.

10. Stator selon l'une quelconque des revendications 1, 2 et 4 à 9, caractérisé en ce que le boîtier de stator (54) est imprégné de résine synthétique ou similaire.

11. Stator selon l'une quelconque des revendications 1, 2 et 4 à 10, caractérisé en ce que des éléments de circuit électroniques (72) sont disposés dans le boîtier de stator (54) en vue de l'alimentation en tension contrôlée des bobines (16).

12. Stator selon l'une quelconque des revendications 1 à 11, caractérisé en ce que le noyau (22) est composé d'un paquet de tôles de noyau formées de bandes de tôle (26) qui s'étendent dans la direction longitudinale (A) du noyau.

13. Stator selon l'une quelconque des revendications 1 à 12, caractérisé en ce que les plaques formant des dents polaires (24) se composent chacune d'un paquet de tôles métalliques pour dents polaires, formé de plaques de tôle (28) disposées perpendiculairement à la direction longitudinale du noyau.

14. Stator selon la revendication 13, caractérisé en ce que les paquets de tôles pour dents polaires sont pourvus chacun d'une fente (32) traversante dans la direction longitudinale (A) et débouchant dans une ouverture (34) recevant le noyau dans le paquet de tôles.

15. Stator selon la revendication 14, caractérisé en ce que les plaques de tôle (28) ont un contour sensiblement en forme de U.

16. Stator selon la revendication 14 ou 15, caractérisé en ce que la fente (32) est disposée sur un côté du stator orienté à l'opposé de l'induit (18).

17. Stator selon l'une quelconque des revendications 14 à 16, caractérisé en ce qu'il est prévu, sur le côté du paquet de tôles pour dents polaires qui fait face à la fente (32), une soudure (36) qui relie les plaques de tôle (28).

18. Stator selon l'une quelconque des revendications 14 à 17, caractérisé en ce que des lignes électriques (46, 50) d'alimentation des bobines (16) sont introduites dans les fentes (32).

19. Stator selon l'une quelconque des revendications 14 à 18, caractérisé en ce qu'une ligne électrique (46) menant à une extrémité d'enroulement intérieure d'une bobine (16) est passée à travers une ouverture traversante (50) d'une paroi latérale (48) d'un support de bobine (40), qui se trouve à une distance appropriée vers l'intérieur.

20. Stator selon l'une quelconque des revendications 1 à 19, caractérisé en ce que les bobines sont raccordées à un redresseur direct pour l'alimentation des lignes électriques.

21. Stator selon la revendication 20, caractérisé en ce que le redresseur direct comprend des triacs (72) ou des thyristors.

22. Stator selon l'une quelconque des revendications 1 à 21, caractérisé en ce qu'il comporte au moins un capteur pour la détection de la position des pôles par la mesure de la tension d'induction produite par les aimants de l'induit dans une bobine (16).

23. Moteur linéaire ou générateur linéaire (10) avec un stator (12) selon l'une quelconque des revendications 1 à 22 et un induit (18) mobile par rapport au stator (12), sur lequel un rail de réaction ou un groupe d'aimants au moins est disposé.

24. Moteur linéaire ou générateur linéaire selon la revendication 23, caractérisé en ce que l'induit (18) entoure le stator (12), et en ce que deux rails de réaction ou groupes d'aimants qui se font face, entre lesquels le stator (12) est disposé, sont disposés sur l'induit (18).

25. Moteur linéaire ou générateur linéaire selon la revendication 24, caractérisé en ce qu'un troisième rail de réaction ou groupe d'aimants, qui fait face à un autre côté du stator, est disposé sur l'induit.

26. Moteur linéaire ou générateur linéaire selon l'une quelconque des revendications 23 à 25, caractérisé en ce que l'induit (18) entoure partiellement ou complètement le stator (12), de manière approximativement circulaire (Figure 11).

27. Moteur linéaire ou générateur linéaire selon l'une quelconque des revendications 23 à 26, caractérisé en ce que les aimants de tous les groupes sont reliés entre eux par une bande de retour magnétique (90).

28. Moteur linéaire ou générateur linéaire selon l'une quelconque des revendications 23 à 26, caractérisé en ce qu'il est prévu une tôle de retour magnétique (98) fixée à l'induit ou au stator sur le côté du rail de réaction (22′) orienté à l'opposé de l'induit (18).

29. Moteur linéaire ou générateur linéaire selon l'une quelconque des revendications 23 à 28, caractérisé en ce qu'il est prévu aussi bien au moins un rail de réaction qu'au moins un groupe d'aimants sur l'induit.

30. Moteur linéaire ou générateur linéaire selon l'une quelconque des revendications 23 à 29 avec un stator selon la revendication 12, caractérisé en ce que pour créer un moteur linéaire (10) avec un trajet courbe au moins par sections, le stator (12) est courbé de manière correspondante, avec une courbure autour d'un axe de cintrage parallèle au plan des tôles métalliques du paquet de tôles.

31. Procédé pour la mesure de la position des pôles dans un moteur linéaire ou générateur linéaire selon l'une quelconque des revendications 23 à 30, caractérisé en ce que pendant une pause du courant d'un enroulement d'entraînement du stator, la tension d'induction produite dans cet enroulement d'entraînement par les aimants de l'induit est mesurée et prise pour base de la détermination de la position des pôles.
